Europäisches Patentamt

European Patent Office

Office européen des brevets

(11) Veröffentlichungsnummer: **0 291 913**
**A2**

## (12) EUROPÄISCHE PATENTANMELDUNG

(21) Anmeldenummer: **88107836.4**

(22) Anmeldetag: **16.05.88**

(51) Int. Cl.4: **H04R 1/10**

(30) Priorität: **16.05.87 DE 3716525**

(43) Veröffentlichungstag der Anmeldung:
**23.11.88 Patentblatt 88/47**

(84) Benannte Vertragsstaaten:
**AT DE FR GB IT NL**

(71) Anmelder: **POLAROID CORPORATION**
**549 Technology Square**
**Cambridge, Massachusetts 02139(US)**

(72) Erfinder: **Weber, Karl**
**Steinäcker 41g**
**D-7000 Stuttgart 75(DE)**

(74) Vertreter: **Koch, Günther, Dipl.-Ing. et al**
**Patentanwälte Dipl.-Ing. C. Wallach Dipl.-Ing.**
**G. Koch, Dr. T. Haibach Dipl.-Ing. R.**
**Feldkamp Kaufingerstrasse 8**
**D-8000 München 2(DE)**

(54) **Walkman-Kopfhörer.**

(57) Bei einem Walkman-Kopfhörer (10) mit einem
mittigen, etwa halbrund gebogenen Kopfbügel (11)
an dessen Endbereichen beidseitig und verschiebbar
jeweils eine, einen Kopfhörer (14) aufweisende, Trägervorrichtung (15,16) angebracht ist, ist eine Brille
(24) angebracht.

Fig. 1

EP 0 291 913 A2

## Walkman-Kopfhörer

Die Erfindung betrifft einen Walkman-Kopfhörer mit einem mittigen, etwa halbrund gebogenen Kopfbügel, an dessen Endbereichen beidseitig und verschiebbar jeweils eine einen Kopfhörer aufweisende Trägervorrichtung angebracht ist.

In vergangener Zeit ist in Mode gekommen, Musik aus transportierbaren Kassetten- bzw. Radiogeräten zu hören. Derartige, im Volksmund "Walkman" genannte, Geräte haben eine starke Verbreitung gefunden und werden in allen Lebensbereichen, wie Freizeit Sport und auch bei der Arbeit getragen. Die Musik wird dabei über Kopfhörer auf das menschliche Ohr übertragen. Die beiden Kopfhörer sind über einen Bügel, der über den Kopf reicht miteinander verbunden und bilden mit diesem den eingangs genannten Walkman-Kopfhörer. Um den Sitz der Kopfhörer auf der Ohrmuschel entsprechend der Kopfform des jeweiligen Benutzers anpassen zu können, sind an den Endbereichen des mittigen Kopfbügels die Kopfhörer verschiebbar angebracht.

Als störend wird empfunden, eine Brille zu tragen und gleichzeitig über einen "Walkman" Musik zu hören. Dies betrifft nicht allein die Brillenträger, sondern auch die Personen, die insbesondere in den Sommermonaten eine Sonnenbrille tragen. Dabei "verheddern" sich im Bereich des Ohres manchmal Kopfhörer und Brillenbügel. Der Sitz der Brille wird vom Kopfhörer beeinträchtigt, die Brillenbügel können sogar vom Kopfhörer abgestrieft werden, was bei Brillenträgern zu gefährlichen Situationen, bpsw. im Straßenverkehr führen kann.

Aufgabe der vorliegenden Erfindung ist, einen einfachen und funktionssicher handhabbaren Walkman-Kopfhörer zu schaffen, mit dem auch die Sehkraft des Auges unterstützt bzw. dieses vor intensiver Sonneneinwirkung geschützt werden kann.

Erfindungsgemäß wird die Aufgabe dadurch gelöst, daß eine Brille am Walkman-Kopfhörer angebracht ist. Durch die Anbringung der Brille an den Walkman-Kopfhörer ist eine "Symbiose" aus Kopfhörer und Brille geschaffen worden, d.h. es kann einerseits Musik gehört und gleichzeitig können die Augen geschützt bzw. unterstützt werden. Es ist ein Verheddern zwischen Walkman und Brille im Bereich des Ohres ausgeschlossen, da nur noch der Kopfhörer auf dem Ohr aufliegt und die Brille am Walkman-Kopfhörer befestigt ist.

Besonders vielseitig einsetzbar und einfach handhabbar ist ein Walkman-Kopfhörer dadurch, daß die Brille lösbar angebracht ist. Ist die .Brille bspw. eine Sonnenbrille und möchte diese zeitweilig nicht getragen werden, so kann sie vom Walkman-Kopfhörer abgenommen werden. Dadurch kann auch der Sitz der Brille am Walkman-Kopfhörer individuell angepaßt werden.

Besonders günstig handhabbar ist ein Walkman-Kopfhörer dadurch, daß die angebrachte Brille verschwenkbar ist. Wobei sie zweckmäßigerweise derart verschwenkbar ist, daß sie bei aufgesetztem Kopfhörer in einer unteren Stellung auf der Nase aufliegt und in einer oberen Schwenkstellung auf dem oberen Kopfende anliegt. Wird die Brille nur kurzzeitig nicht benötigt, kann sie von der Nase auf den Kopf hochgeschoben werden, so daß sie dann etwa gleichsinnig zum Kopfbügel des Kopfhörer über den Kopf verläuft. Dies kann bspw. dann erwünscht sein, wenn die Brille eine Sonnenbrille ist und man diese nur kurzfristig nicht mehr verwenden will.

Besonders einfach und funktionssicher handhabbar ist ein Walkman-Kopfhörer dadurch, daß die Brille an ihren beiden Bügelenden mit je einem Klemmbügel versehen ist, über die sie an den Walkman-Kopfhörer anbringbar ist

In einer besonders funktionssicheren Ausgestaltung ist jeder Klemmbügel mit einer Feststellvorrichtung versehen, so daß ein am Walkman-Kopfhörer anliegender Klemmbügel durch die festgestellte Feststellvorrichtung unverrückbar gehalten ist.

Besonders gut gehalten und somit funktionssicher ist eine Brille dadurch, daß der Klemmbügel aus einem Streifen besteht, an dessen Endbereichen jeweils aus der Streifenebene gebogene Laschen vorgesehen sind, die, in Längsrichtung des Streifens gesehen, ein U-förmiges Profil aufweisen, und daß die Feststellvorrichtung an einer der beiden Laschen vorgesehen ist. Die Klemmbügel liegen mit den U-Profillaschen am Walkman-Kopfhörer an, d.h. sie umgreifen ihn dann von drei Seiten, so daß bei festgestellter Feststellvorrichtung ein besonders stabiler Sitz gewährleistet ist.

Zweckmäßigerweise bilden dazu an dem einen ersten Ende des Streifens zwei seitliche um etwa 90° aus der Streifenebene gebogene Lasche die Schenkel des ersten U-Profils und am zweiten Ende bildet eine seitlich vorspringende zweifach gebogene Lasche den Boden und einen Schenkel des zweiten U-förmigen Profils, so daß, in Längsrichtung des Streifens vom ersten U-Profil aus gesehen, die Öffnungsrichtung des zweiten U-Profils gegenüber der des ersten etwa um 90° verdreht ist.

Besonders fest und unverrückbar sitzend und somit funktionssicher ist eine angebrachte Brille dadurch, daß der Streifen etwa geradlinig verläuft und daß bei an den Walkman-Kopfhörer angelegtem Klemmbügel und angezogener Feststellvorrichtung aufgrund der Krümmung des Walkman-Kopfhörers längs des Klemmbügels dieser unter Spannung gehalten ist.

Dadurch, daß jeder Klemmbügel an der dem Kopf zugewandten Innenseite des Walkman-Kopfhörers angebracht is, kann bei auf der Außenseite verlaufendem Kopfbügel dieser ungestört, relativ zu den Trägervorrichtungen verstellt bzw. verschoben werden.

Konstruktiv besonders einfach ist ein Walkman-Kopfhörer dadurch, daß direkt am Kopfbügel ein Sonnenschutzglas oder ein Brillenmittelteil angebracht ist. Bei dieser "Symbiose" aus Brille und Kopfhörer bildet der Kopfbügel des Kopfhörers gleichzeitig die Brillenbügel, d.h. diese Teile sind identisch.

Besonders vielseitig einsetzbar ist ein Walkman-Kopfhörer dadurch, daß das Sonnenschutzglas oder das Brillenmittenteil lösbar angebracht ist.

Konstruktiv besonders einfach erfolgt die Anbringung am Kopfbügel durch Aufstecken, Annieten, Auffädeln, oder mittels einer Lasche. Bei Vorsehen von Sonnenschutzglas aus Kunststoffmaterial ist es besonders vorteilhaft, diesen direkt an den Kopfbügel anzunieten. Bei den Ausgestaltungen durch Aufstecken, Auffädeln oder mittels einer Lasche kann je nach Bedarf das Sonnenschutzglas bzw. das Brillenmittenteil jeweils auch wieder abgenommen werden.

Ein besonders guter Sitz des Walkman-Kopfhörers mit der Anbringung direkt am Kopfbügel ist dadurch erreicht, daß in den Endbereichen des Kopfbügel oder an den endseitigen Trägervorrichtungen jeweils ein Steckbügel vorgesehen ist, wodurch der Kopfhörer im Endbereich verlängert ist. Da in diesen Ausführungen der Kopfhörerbügel zugleich den Brillenbügel darstellt und bei auf der Nase aufliegender Brille von dieser zum Ohr reicht, ist durch Vorsehen der am Kopf im Bereich hinter dem Ohr anliegenden Verlängerungssteckbügel, ein besonders fester Sitz des Walkman-Kopfhörers erreicht.

Zweckmäßigerweise sind die Steckbügel verschwenkbar angeordnet, so daß, bei auf den Kopf hochgeschobenem Walkman-Kopfhörer, diese dann um 180° verschwenkt werden können und parallel auf die Kopfspitze zu gerichtet am Kopfhörerbügel anliegen.

Die Erfindung wird anhand der beiliegenden Zeichnung näher beschrieben und erläutert. Es zeigt:

Figur 1 perspektivisch und teilweise - schematisch ein erstes Ausführungsbeispiel,

Figur 2 eine abschnittsweise Vorderansicht eines zweiten Ausführungsbeispiels,

Figur 3 eine Hinteransicht des Abschnitts von Figur 2,

Figur 4 den Abschnitt von Figur 2 von der Kopfseite aus,

Figur 5 den Abschnitt von Figur 2 von der Außenseite aus,

Figur 6 eine perspektivische Ansicht eines Klemmbügels des zweiten Ausführungsbeispiels,

Figur 7 perspektivisch einen Klemmbügel des ersten Ausführungsbeispiels, und

Figur 8 perspektivisch ein drittes Ausführungsbeispiel.

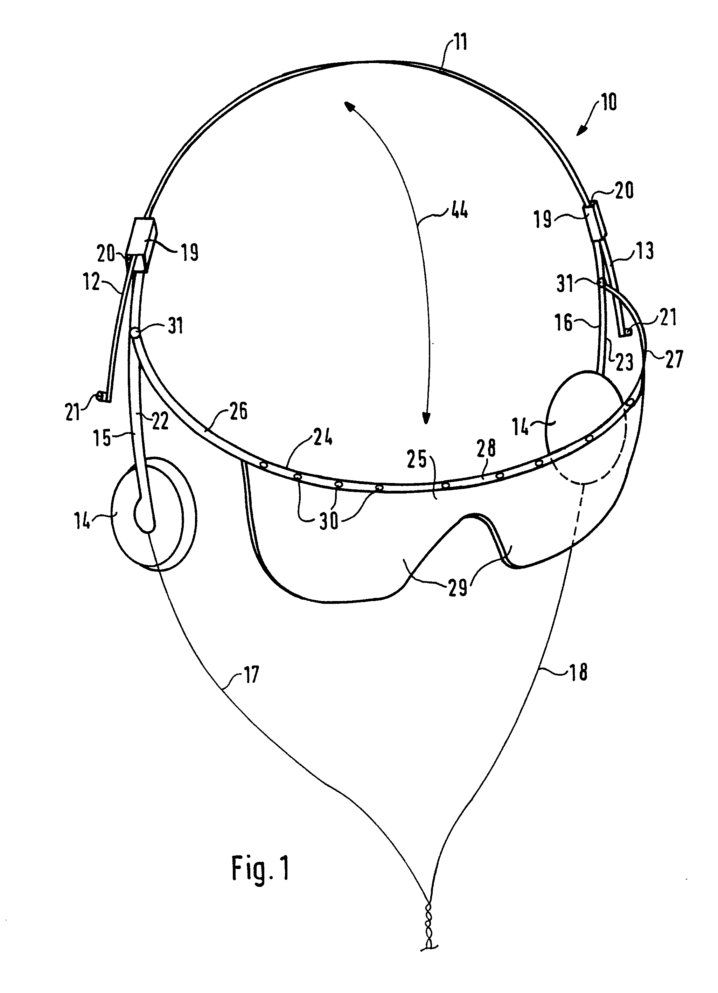

Ein in Fig. 1 gezeigter Walkman-Kopfhörer 10 weist einen mittigen, etwa halbrund gebogenen Kopfbügel 11 auf, an dessen Endbereichen 12 bzw. 13 jeweils eine einen Kopfhörer 14 aufweisende Trägervorrichtung 15 bzw. 16 angebracht ist. Die Kopfhörer 14 stehen über Kabel 17 bzw. 18 mit einem hier nicht gezeigten Kassettenrecorder in Verbindung.

Jede Trägervorrichtung 15 bzw. 16 weist an ihrem oberen Ende ein Gleitelement 19 auf, durch das der Kopfbügel 11 hindurchreicht. Jedes Gleitelement 19 weist dabei eine Öffnung 20 auf, die etwa dem Querschnitt des Kopfbügels 11 entspricht, so daß dieser gegen einen geringen Reibungswiderstand längs des Gleitelements 19 verschoben werden kann. Diese Verschiebbarkeit dient dazu, den Walkman-Kopfhörer 10 an die jeweilige Kopfgröße des Benutzers anzupassen. Die maximale Größenverstellmöglichkeit ist durch, einen jeweils am äußeren Ende des Kopfbügels 11 angeordneten, Stopper 21 begrenzt. Der Kopfbügel 11 ist dabei so vorgespannt, daß er bei abgesetztem Walkman-Kopfhörer 10 die Kopfhörer 14 aufeinander zubewegt.

Der Kopfbügel 11 besteht aus einem Metallstreifen. Die Trägervorrichtungen 15 bzw. 16 bestehen aus Kunststoffmaterial, an denen die Gleitelemente 19 als endseitige quaderförmige Verdickungen einstückig angesetzt bzw. angeformt sind. Die Trägervorrichtungen 15, 16 werden nach üblichen Spritzgußverfahren hergestellt.

Die Öffnung 20 im Gleitelement 19 ist dabei so angeordnet, daß der Kopfbügel 11 im Bereich der Trägervorrichtungen 15, 16 etwa parallel zu deren Außenseiten 22 bzw. 23 verläuft. Bei der in Fig. 1 gezeigten zeichnerischen Darstellung ist deutlichkeitshalber dieser Verlauf etwas divergierend angezeigt. Bei auf dem Kopf aufgesetztem Walkman-Kopfhörer 10 liegt dann der Kopfbügel 11 im Bereich der Trägervorrichtungen 15, 16 an deren Außenseiten 22 bzw. 23 an.

An den beiden Trägervorrichtungen 15 bzw. 16 ist eine Brille 24 angebracht.

Die Brille 24 weist ein Brillenmittenteil 25 und zwei0 Brillenbügel 26 bzw. 27 auf.

Die in Fig. 1 gezeigte Brille 24 ist derart aufgebaut, daß die Brillenbügel 26 bzw. 27 über einen Bügel 28 des Brillenmittenteils 25 ineinander übergehen. Sie ist also einstückig, d.h. mit einem einzigen durchgehenden Bügel ausgebildet. Im Bereich des Brillenmittenteils 25 sind die Brillengläser 29, die hier ebenfalls einstückig ausgebildet sind, angebracht. Das einstückige Brillenglas besteht aus Kunststoff und ist im Bereich des Brillenmittenteils 25 an den Bügel 28 über Nieten 30 angenietet.

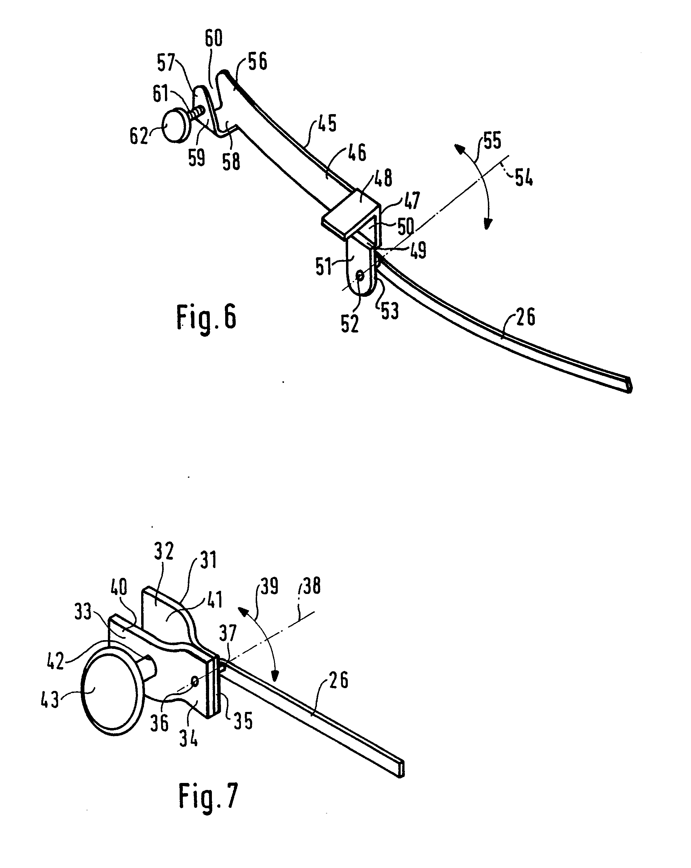

Die Enden der Brillenbügel 26, 27 sind über Klemmbügel 31 (siehe Fig. 7) verbunden. In Fig. 1 sind die Klemmbügel 31 nur schematisch angedeutet, ihr konstruktiver Aufbau ist in Fig. 7 näher gezeigt und wird nachfolgend beschrieben.

Der in Fig. 7 gezeigte Klemmbügel 31 entspricht dem in Fig. 1 auf der linke Seite gezeigten Klemmbügel 31 und ist mit dem Brillenbügel 26 verbunden. Der Klemmbügel 31 besteht dabei aus zwei gekröpften Laschen 32 bzw. 33, die in einem ersten Bereich 34 bzw. 35 aneinanderliegen und miteinander verlötet sind. Durch die verbundenen Bereiche 34, 35 hindurch reicht ein Stift 36, der mit dem Ende 37 des Brillenbügels 26 fest verbunden ist. Der Stift 36 ist in den Bereichen 34, 35 drehbar aufgenommen, so daß der Brillenbügel 26 bzw. die damit verbundene Brille um die Stiftachse 38 verschwenkbar ist, wie dies durch einen Pfeil 39 angedeutet ist.

In einer weiteren, hier nicht gezeigten, Ausführung, ist der Stift 36 als Hohlniete ausgebildet, so daß er gleichzeitig als Befestigungsmittel für die beiden Bereiche 34 bzw. 35 der Laschen 32 bzw. 33 dient, d.h. sie können entweder nur durch diese Hohlniete zusammengehalten werden oder zusätzlich auch noch verlötet sein, was dann eine besonders innige Verbindung gibt. In der Hohlniete läuft dann der eigentliche Stift 36, der dann wie zuvor beschrieben fest mit dem Ende 37 des Brillenbügels 26 verbunden ist.

Die beiden gekröpften Laschen 32 bzw. 33 verlaufen in den Bereichen 40 bzw. 41 im Abstand und parallel zueinander und zwar derart, daß zwischen diesen beiden ein entsprechender Teil einer Trägervorrichtung 15 aufgenommen werden kann. Die Lasche 33 weist im Bereich 40 eine Gewindebohrung 42 auf, in der eine Feststellschraube 43 aufgenommen ist. Die Längsachse der Feststellschraube 43 verläuft dabei etwa parallel zur Stiftachse 38. Durch Festdrehen der Feststellschraube 43 bei an die Trägervorrichtung 15 angelegtem Klemmbügel 31 ist die Brille 24 fest mit dem Walkman-Kopfhörer 10 verbunden und kann gleichzeitig verschwenkt werden, wie dies in Fig. 1 durch eine Pfeil 44 angedeutet ist.

Der Klemmbügel 31 auf der gegenüberliegenden Seite, d.h. also in Fig. 1 auf der rechten Seite, der mit dem Brillenbügel 27 verbunden ist, ist dabei spiegelbildlich zu dem in Fig. 7 gezeigten Klemmbügel 31 ausgebildet, so daß bei an den Walkman-Kopfhörer 10 angebrachter Brille 24 die Feststellschrauben 43 vom Benutzer jeweils von außen zu bedienen sind.

In der unteren Schwenkstellung, wie in Fig. 1 gezeigt, liegt die Brille 24 auf der Nase des Benutzers auf, in der oberen Schwenkstellung verläuft sie. etwa parallel zum Kopfbügel 11 und liegt auf der Kopfoberseite an.

Durch geringfügiges Lösen der Feststellschrauben 43 kann die Brille 24 längs der Trägervorrichtungen 15 bzw. 16 verschoben werden und zwar im Bereich zwischen dem Kopfhörer 14 und dem Gleitelement 19, so daß die Brille auf die gewünschte Sitzhöhe eingestellt werden kann. Unabhängig davon kann selbstverständlich weiterhin der Sitz der Kopfhörer durch Verschieben der Trägervorrichtungen 15 bzw. 16 längs des Kopfbügels 11 verstellt werden. Dadurch sind individuelle Anpassungsmöglichkeiten an die jeweilige Kopfform des Benutzers möglich.

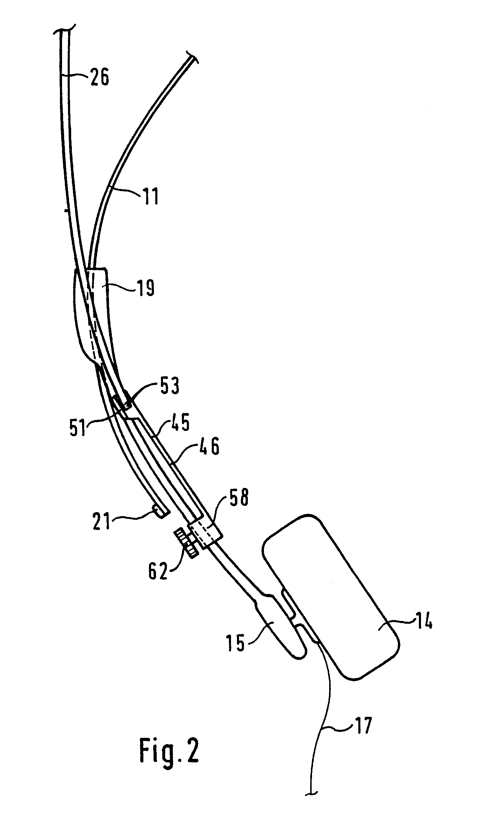

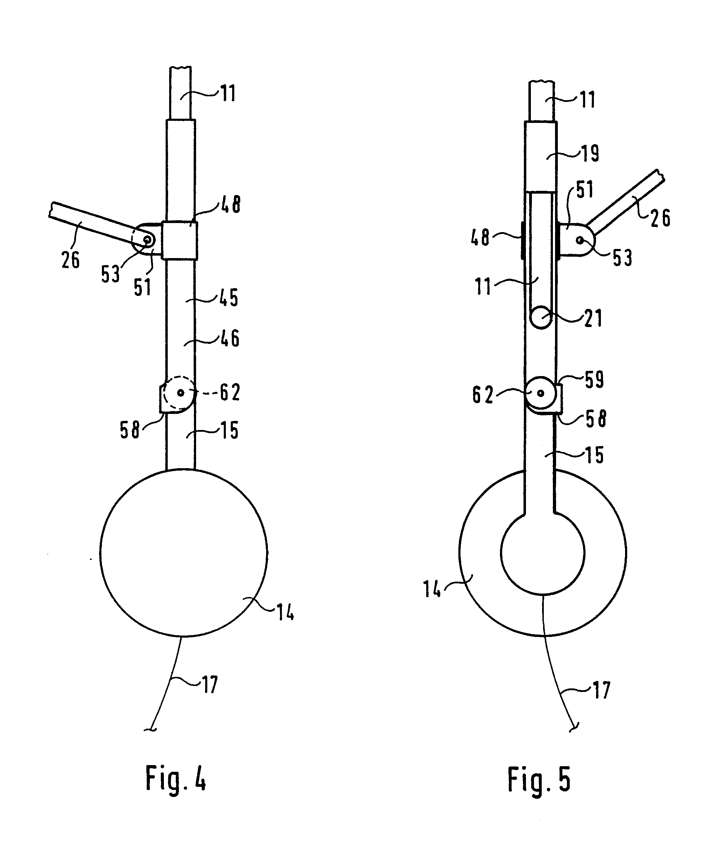

Bei dem in den Fig. 2 bis 6 gezeigten zweiten Ausführungsbeispiel, ist der Walkman-Kopfhörer 10 bezüglich Kopfbügel 11 und Trägervorrichtungen 15 bzw. 16 entsprechend dem in Fig. 1 gezeigten Beispiel ausgebildet. Die in Fig. 2 bis 5 gezeigten abschnittsweisen Darstellungen zeigen eine Trägervorrichtung 15, die an ihrem unteren Ende mit dem Kopfhörer 14 verbunden ist, von dem das Kabel 17 ausgeht. Daher sind auch dieselben Bezugszeichen verwendet. Hier ist der Brillenbügel 26 mit einem Klemmbügel 45 verbunden.

Der konstruktive Aufbau des Klemmbügels 45 des zweiten Ausführungsbeispiels wird zunächst anhand von Fig. 6 näher beschrieben.

Der Klemmbügel 45 besteht aus einem etwa geradlinig verlaufenden Streifen 46 an dessen erstes Ende 47 zwei Laschen 48 bzw. 49 vorgesehen sind, die um etwa 90° gleichsinnig aus der Streifenebene herausgebogen sind. Die beiden Laschen 48, 49 verlaufen etwa parallel und bilden die Schenkel eines ersten U-förmigen Profils 50.

Vom äußeren Ende der Lasche 49 springt eine plattenförmige Kröpfung 51 vor, die etwa parallel zur Fläche des Streifens 46 verläuft, und deren Längsachse etwa senkrecht zur Längsachse des Streifen 46 steht.

Die plattenförmige Kröpfung 51 ist mit einer Öffnung 52 versehen, durch die ein Stift 53 reicht, der fest mit dem Brillenbügel 26 verbunden ist. Der Stift 53 ist dabei drehbar in der Öffnung 52 gelagert, so daß der Brillenbügel 26 bzw. die damit verbundene Brille um die Stiftachse 54, wie dies durch ein Pfeil 55 angedeutet ist, verschwenkt werden kann.

Der Streifen 46 ist an seinem zweiten Ende 56 mit einer seitlich vorspringenden, zweifach gebogenen Lasche 57 versehen, deren erster abgebogener Bereich 58 den Boden und deren zweiter abgebogener Bereich 59 den Schenkel eines zweiten U-Profils 60 bilden.

Schaut man vom ersten U-Profil 50 aus in Längsrichtung des Streifens 46, so ist die Öffnungsrichtung des zweiten U-Profils 60 gegenüber dem ersten um etwa 90° im Uhrzeigersinn verdreht.

Im zweiten Bereich 59, d.h. also den Schenkel des U-Profils 60 bildenden Teils der Lasche 57, ist eine Gewindebohrung 61 vorgesehen, in der eine Feststellschraube 62 aufgenommen ist.

Wie aus Fig. 2 bis 5 zu entnehmen, ist der in Fig. 6 gezeigte Klemmbügel 45 von der Kopfseite her an die Trägervorrichtung 15 angelegt.

Im Bereich des U-Profils 50, das mit dem Brillenbügel 26 verbunden ist, ist die Trägervorrichtung 15 von drei Seiten umgriffen, wobei die Öffnungsrichtung des U-Profils vom Kopf weggerichtet ist.

Im Bereich des U-Profils 60, das mit der Feststellschraube 62 versehen ist, ist die Trägervorrichtung 15 ebenfalls von drei Seiten umgriffen, wobei die Öffnungsrichtung des U-Profils in Richtung Hinterkopf verläuft.

Beim Anlegen der Brille 24 an den Walkman-Kopfhörer 10 wird der Klemmbügel 45 bei gelöster Feststellschraube 62 mit der zuvor beschriebenen Ausrichtung der U-Profile 50 bzw. 60 an der Trägervorrichtung 15 angelegt. Wie aus Fig. 2 bis 5 zu entnehmen, ist die Länge des Klemmbügels 45 geringer als der Abstand zwischen Kopfhörer 14 und Gleitelement 19, so daß bei angelegtem Klemmbügel 45 und noch gelöster Feststellschraube 62 dieser längs der Trägervorrichtung 15 verschoben werden kann, wodurch die Sitzhöhe der Brille bezüglich des Sitzes des Kopfhörers 14 auf dem Ohr eingestellt werden kann. Nach Festdrehen der Feststellschraube 62 ist der Klemmbügel 45 unverrückbar an der Trägervorrichtung 15 gehalten.

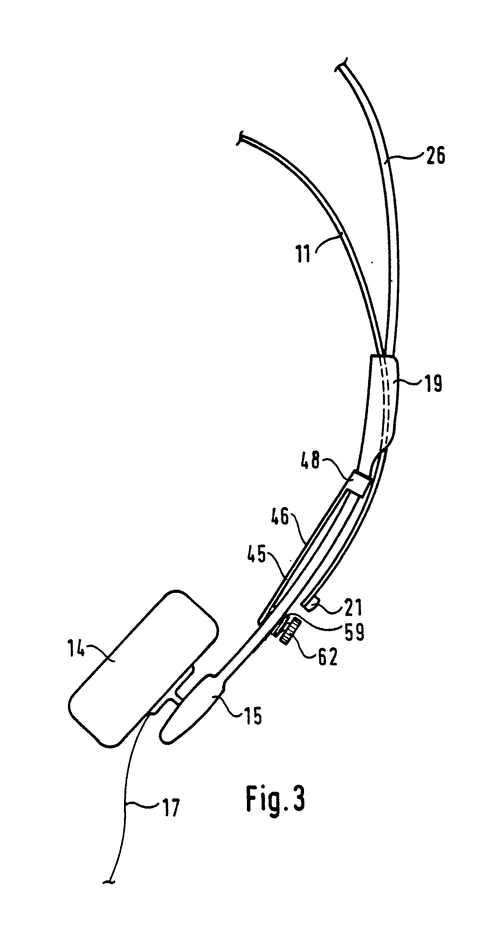

Wie insbesondere aus Fig. 2 und 3 zu entnehmen, verläuft die Trägervorrichtung 15 im Bereich zwischen Kopfhörer 14 und Gleitelement 19 mit einer sanften Krümmung. Der Streifen 46 des Klemmbügels 45 dahingegen verläuft gerade, so daß dieser bei festgestellter Feststellschraube 62 unter Federspannung gehalten ist.

Durch das Anliegen des Klemmbügels 45 von der Kopfinnenseite aus, ist die Gleitbewegung des Kopfbügels 11 längs der Trägervorrichtung 15 unbeeinflußt, so daß diese Relativbewegung zwischen Tragervorrichtung 15 und Kopfbügel 11 auch bei angelegter Brille ungestört möglich ist.

In der in Fig. 2 bis 6 gezeigten Ausführung besteht der Klemmbügel 45 aus einem Metallstreifen, der über einen Metallstift 36 mit dem Brillenbügel 46 aus Metall verbunden ist.

In weiteren, hier nicht gezeigten, Ausführungsbeispielen besteht der Klemmbügel aus Kunststoff und je nach Ausführung der Brille kann der Brillenbügel 26 ebenfalls aus Kunststoff oder wiederum aus Metall bestehen.

Je nach Ausgestaltung der Brille kann eine in Fig. 6 oder in Fig. 7 gezeigter Klemmbügel verwendet werden. Bei einer besonders leichten Ausführung, wie sie bspw. in Fig.1 gezeigt ist, d.h. mit einem durchgehenden Brillenbügel und Brillengläsern aus Kunststoff kann die in Fig. 7 gezeigte Ausführung ausreichen. Bei Verwendung von einer "klassischen" Brille mit geschliffenen Gläsern und Brillenmittenteil ggf. mit dem entsprechenden Scharnier zwischen Mittenteil und Brillenbügel, womit ein höheres Gewicht mit der Brille verbunden ist, wird dann vorzugsweise die in Fig. 6 gezeigte Ausführung verwendet, die dann einen stabilen Sitz der Brille gewährleistet.

Die in Fig. 6 gezeigte Ausführung eines Klemmbügels 45 mit den jeweils um 90° verdrehten U-Profilen 50, 60 gewährleistet einerseits einen sicheren Sitz und ermöglichet andererseits bei einem starken Ruck ein abgleiten des Klemmbügels 45 vom Walkman-Kopfhörer 10. Dies ist aus sicherheitstechnischer Sicht deshalb wünschenswert, da es möglich ist, daß bspw. bei auf der Nase aufsitzender Brille der Kopfbügel 11 des Walkman-Kopfhörers 10 über den Hinterkopf in Richtung Hals rutscht, so daß dieser dann rundum von der Brille bzw. dem Kopfbügel umgeben ist. Hakt dann der Walkmann-Kopfhörer bspw. bei einem Unfall an irgendeiner Stelle ein, kann durch die zuvor erwähnte Abgleitmöglichkeit keine Strangulierung des Benutzers erfolgenb.

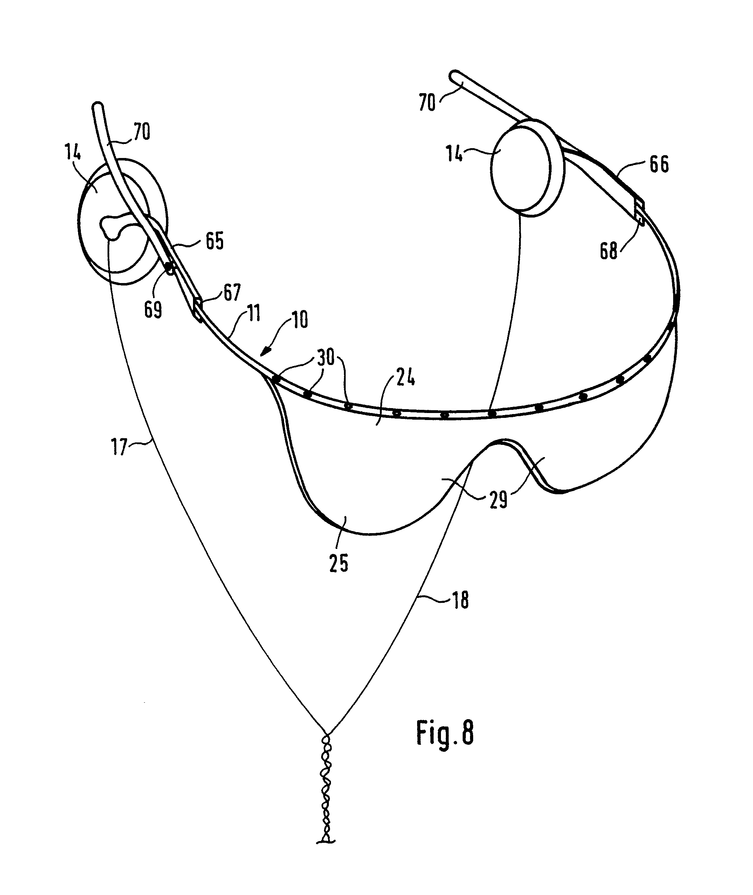

Bei einem in Fig. 8 gezeigten weiteren Ausführungsbeispiel weist ein Walkman-Kopfhörer 10, wie zuvor beschrieben, einen Kopfbügel 11 und zwei Trägervorrichtungen 65 bzw. 66 auf. Die Trägervorrichtungen 65 bzw. 66 sind an ihrem unteren Ende wieder mit einem Kopfhörer 14 versehen, die über Kabel 17 bzw. 18 mit einem hier nicht gezeigten Kassettenrecorder verbunden sind.

Die Trägervorrichtungen 65 bzw. 66 weisen eine innere Ausnehmung 67 bzw. 68 auf, in die der Kopfbügel 11 eingeschoben werden kann. Daraus resultiert wieder die Relativverschiebbarkeit zwischen Kopfbügel 11 und Trägervorrichtungen 65 bzw. 66. Der Querschnitt der Ausnehmungen 67 bzw. 68 entspricht dabei in etwa dem Querschnitt des Kopfbügels 11, so daß dieser gegen einen gewissen Reibungswiderstand darin gleiten kann. In dem in Fig. 8 gezeigten Ausführungsbeispiel ist eine Brille 24 direkt an den Kopfbügel 11 angebracht. Das Brillenmittenteil 25 besteht dabei aus einem einzigen durchgehenden Brillenglas 29, das aus Kunststoff besteht und über Nieten 30 am Kopfbügel 11 angenietet ist. In dieser Ausführung stellt der Teil des Kopfbügel 11, der sich zwischen Brillenmittenteil 25 und Trägervorrichtung 65 bzw.

66 erstreckt, gleichzeitig Kopfbügel und Brillenbügel dar.

In weiteren Ausführungsbeispielen ist das Brillenmittenteil am oberen Ende mit einer gebogenen Lasche versehen und kann auf den Kopfbügel aufgeschoben werden. Durch entsprechend verschiedene Krümmungsradien von Kopfbügel bzw. Brillenmittenteil kann dann bei auf den Kopfbügel aufgeschobener Lasche eine verspannte Verbindung resultieren, die einen unverrückbaren festen Sitz der Brille garantiert, gleichzeitig aber auch wieder eine Abnahmemöglichkeit gibt. In weiteren Ausführungsbeispielen ist die Oberseite des Brillenmittenteils mit einer Perforation versehen, durch die ein Faden durchgefädelt werden kann, der dann gleichzeitig den Brillenbügel umwickelt und so die Verbindung zwischen Brille und Walkman-Kopfhörer herstellt. Auch hier ist dann wieder die Möglichkeit der Abnahme der Brille je nach Wunsch gegeben.

An jeder Trägervorrichtung 65 bzw. 66 ist an der vom Kopf abgewandten Außenseite ein Bolzen 69 vorgesehen, der mit einem Ende eines Steckbügel 70 verbunden ist.

Die Steckbügel 70 verlaufen etwa parallel zur Trägervorrichtung 65 bzw. 66 und verlängern diese über den Ohrbereich in Richtung Hinterkopf hinaus. Die Steckbügel 70 weisen eine auf das Kopfinnere gerichtete Krümmung auf und dienen als zusätzliche Haltehilfe. Diese Haltehilfe ist dann erwünscht, wenn der Walkman-Kopfhörer 10 mit seinem Brillenteil auf der Nase aufliegt und verhindert ein Abrutschen der Kopfhörer 14 von den Ohren, wenn bspw. ruckartige Bewegungen bspw. durch Hüpfen und Springen ausgeführt werden. Die Steckbügel 70 sind um die Bolzen 69 um etwa 180° - schwenkbar, so daß deren Spitze dann Richtung Kopfbügelmitte gerichtet sind. Die zusätzlich Haltefunktion der Steckbügel 70 wird ja dann, wenn der Walkman-Kopfhörer 10 samt Brillenteil auf den Kopf hochgeschoben wird, nicht mehr benötigt. Dies gilt gleichermaßen natürlich auch, wenn das Brillenmittenteil wieder abgenommen ist und der Walkman-Kopfhörer ohne diese verwendet wird.

## Ansprüche

1. Walkman-Kopfhörer mit einem mittigen, etwa halbrund gebogenen Kopfbügel, an dessen Endbereichen beidseitig und verschiebbar jeweils eine, einen Kopfhörer aufweisende, Trägervorrichtung angebracht ist,**dadurch gekennzeichnet,** daß eine Brille (24) am Walkman-Kopfhörer (10) angebracht ist.

2. Walkman-Kopfhörer nach Anspruch 1, dadurch gekennzeichnet, daß die Brille (24) lösbar angebracht ist.

3. Walkman-Kopfhörer nach Anspruch 1 oder 2, dadurch gekennzeichnet, daß die angebrachte Brille (24) verschwenkbar ist.

4. Walkman-Kopfhörer nach Anspruch 3, dadurch gekennzeichnet, daß die Brille (24) derart verschwenkbar ist, daß sie bei aufgesetztem Walkman-Kopfhörer (10) in einer unteren Stellung auf der Nase aufliegt und in einer oberen Schwenkstellung auf dem oberen Kopfende anliegt.

5. Walkman-Kopfhörer nach Anspruch 1 oder einem der folgenden, dadurch gekennzeichnet, daß die Brille (24) an den Endbereichen des Kopfbügels (11) befestigt ist.

6. Walkman-Kopfhörer nach einem der Ansprüche 1 bis 5, dadurch gekennzeichnet, daß die Brille (24) an den beiden Trägervorrichtungen (15,16) befestigt ist.

7. Walkman-Kopfhörer nach Anspruch 1 oder einem der folgenden, dadurch gekennzeichnet, daß die Brille (24) an ihren beiden Bügelenden mit je einem Klemmbügel (31,45) versehen ist, über die sie am Walkman-Kopfhörer (10) anbringbar ist.

8. Walkman-Kopfhörer nach Anspruch 7, dadurch gekennzeichnet, daß Jeder Klemmbügel (31,45) mit einer plattenförmigen Kröpfung (34,35;51) versehen ist, an der die Brille (24) über ein Scharnier befestigt ist.

9. Walkman-Kopfhörer nach Anspruch 7 oder 8, dadurch gekennzeichnet, daß jeder Klemmbügel (31,45) mit einer Feststellvorrichtung (43,62) versehen ist, so daß ein am Walkman-Kopfhörer (10) anliegender Klemmbügel (31,45) durch die festgestellte Feststellvorrichtung (43,62) unverrückbar gehalten ist.

10. Walkman-Kopfhörer nach Anspruch 7 oder einem der folgenden, dadurch gekennzeichnet, daß der Klemmbügel (45) aus einem Streifen (46) besteht, an dessen Endbereichen (47,56) jeweils aus der Streifenebene gebogene Laschen (48,49,57) vorgesehen sind, die, in Längsrichtung des Streifens (46) gesehen, ein U-förmiges Profil (50,60) aufweisen, und daß die Feststellvorrichtung (62) an einer der Laschen (57) vorgesehen ist.

11. Walkman-Kopfhörer nach Anspruch 10, dadurch gekennzeichnet, daß an einem ersten Ende (47) des Streifens (46) zwei seitliche, um etwa 90° aus der Streifenebene gebogene Laschen (48,49) die Schenkel des ersten U-Profils (50) bilden, und daß am zweiten Ende (56) eine seitlich vorspringende zweifach gebogene Lasche (57) den Boden (58) und einen Schenkel (59) des zweiten U-Profils (60) bilden, so daß, in Längsrichtung des Streifens (46) vom ersten U-Profil (50) aus gesehen, die Öffnungrichtung des zweiten U-Profils (60) gegenüber der des ersten um etwa 90° verdreht ist.

12. Walkman-Kopfhörer nach Anspruch 11, dadurch gekennzeichnet, daß die Feststellvorrichtung (62) im Schenkel (59) des zweiten U-Profils (60) bildenden Teils der zweifach gebogenen Lasche (57) angeordnet ist.

13. Walkman-Kopfhörer nach Anspruch 12, dadurch gekennzeichnet, daß die Feststellvorrichtung aus einer Gewindebohrung (61) und einer darin aufgenommenen Feststellschraube (62) besteht.

14. Walkman-Kopfhörer nach Anspruch 11 oder einem der folgenden, dadurch gekennzeichnet, daß vom äußeren Ende einer Lasche (49) des ersten Endes (47) des Streifens (46) die plattenförmige Kröpfung (51) derart vorspringt, daß deren Plattenfläche etwa parallel zur Streifenfläche verläuft.

15. Walkman-Kopfhörer nach Anspruch 10 oder einem der folgenden, dadurch gekennzeichnet, daß jeder Klemmbügel (45) an der dem Kopf zugewandten Seite des Walkman-Kopfhörers (10) angeordnet ist.

16. Walkman-Kopfhörer nach Anspruch 10 oder einem der folgenden, dadurch gekennzeichnet, daß der Streifen (46) etwa geradlinig verläuft und daß bei an den Walkman-Kopfhörer (10) angelegtem Klemmbügel (45) und angezogener Feststellvorrichtung (62) aufgrund der Krümmung des Walkman-Kopfhörers (10) längs des Klemmbügels (45) dieser unter Spannung gehalten ist.

17. Walkman-Kopfhörer nach Anspruch 1, dadurch gekennzeichnet, daß direkt am Kopfbügel (11) ein Sonnenschutzglas oder ein Brillenmittenteil (25) angebracht ist.

18. Walkman-Kopfhörer nach Ansrpuch 17, dadurch gekennzeichnet, daß das Sonnenschutzzglas oder das Brillenmittenteil (25) lösbar angebracht ist.

19. Walkman-Kopfhörer nach Anspruch 17 oder 18, dadurch gekennzeichnet, daß die Anbringung am Kopfbügel (11) durch Aufstecken, Annieten, Auffädeln oder mittels einer Lasche erfolgt.

20. Walkman-Kopfhörer nach Anspruch 17 oder einem der folgenden, dadurch gekennzeichnet, daß im Endbereich des Kopfbügels (11) oder an den endseitigen Trägervorrichtungen (65,60) jeweils ein Steckbügel (70) vorgesehen ist, wodurch der Walkman-Kopfhörer (10) im Endbereich verlängert ist.

21. Walkman-Kopfhörer nach Anspruch 20, dadurch gekennzeichnet, daß die Steckbügel (70) um 180° verschwenkbar angeordnet sind.

Fig. 1

Fig. 2

Fig.3

Fig. 4

Fig. 5

0 291 913

Fig. 6

Fig. 7

Fig.8